# EUROPEAN PATENT APPLICATION

(11) **EP 4 135 128 A1**
(43) Date of publication of application: **15.02.2023**
(21) Application number: 21787759.6
(22) Date of filing: 13.04.2021
(51) Int. Cl.: H01Q 5/50

(54) **SERIES-FED ANTENNA, COMMUNICATION DEVICE, AND METHOD FOR MANUFACTURING SERIES-FED ANTENNA**

(30) Priority: 14.04.2020 CN 202010288400
(71) Applicant: Huawei Technologies Co., Ltd., Longgang Shenzhen, Guangdong 518129 (CN)
(72) Inventor: ZHOU, Yuxiang, Shenzhen, Guangdong 518129 (CN); PENG, Jie, Shenzhen, Guangdong 518129 (CN); YANG, Xiaopan, Shenzhen, Guangdong 518129 (CN)
(74) Representative: Gill Jennings & Every LLP
(86) International application number: PCT/CN2021/086877
(87) International publication number: WO 2021/208901

(57) **Abstract**

This application provides a series-fed antenna, a communication device, and a series-fed antenna manufacturing method. The series-fed antenna includes: a first substrate, where a first metal dielectric is disposed on a lower surface of the first substrate; and a second substrate, where the second substrate is disposed above the first substrate, a second metal dielectric is disposed between the second substrate and the first substrate, a plurality of plated holes are formed through the second metal dielectric, the first substrate, and the first metal dielectric, a region from the first metal dielectric to the second metal dielectric is formed based on the plurality of plated holes, at least one slot is disposed in the second metal dielectric, the at least one slot is located in the region, at least one radiation patch is disposed on an upper surface of the second substrate, and the at least one slot corresponds to the at least one radiation patch. According to the series-fed antenna provided in embodiments of this application, operating bandwidth of a series-fed antenna can be improved. In addition, the series-fed antenna has a simple structure and occupies a small area.

## Description

This application claims priority to Chinese Patent Application No. 202010288400.2, filed with the Chinese Patent Office on April 14, 2020 and entitled "SERIES-FED ANTENNA, COMMUNICATION DEVICE, AND SERIES-FED ANTENNA MANUFACTURING METHOD", which is incorporated herein by reference in its entirety.

### TECHNICAL FIELD

This application relates to the communication field, and in particular, to a series-fed antenna, a communication device, and a series-fed antenna manufacturing method.

### BACKGROUND

Series-fed antennas are widely used because the series-fed antenna has a relatively simple feeder structure and occupies a relatively small area. However, a series-fed standing wave antenna is characterized by relatively narrow bandwidth.

To implement a wideband series-fed antenna, in an implementation, a multi-layer stacked structure may be used. Through disposition of two or even more layers of patches, at least two in-band resonance points can be implemented, so that required bandwidth can be covered. However, in this implementation, a plurality of layers of printed circuit boards (printed circuit board, PCB) are required to be stacked. Consequently, implementation is complex and costs are relatively high.

In another implementation, a series-fed traveling wave antenna may be used. A working feature of the series-fed traveling wave antenna is an energy dissipation working mode. For a relatively wide frequency band range, a difference in energy dissipation is relatively small. Therefore, wideband working can be implemented. However, in this implementation, clear beam dispersion occurs, and consequently, system processing costs and algorithm processing complexity are increased.

### SUMMARY

Embodiments of this application provide a series-fed antenna, a communication device, and a series-fed antenna manufacturing method, to improve operating bandwidth of a series-fed antenna. In addition, the series-fed antenna has a simple structure and occupies a small area.

According to a first aspect, a series-fed antenna is provided. The antenna includes: a first substrate, where a first metal dielectric is disposed on a lower surface of the first substrate; and a second substrate, where the second substrate is disposed above the first substrate, a second metal dielectric is disposed between the second substrate and the first substrate, a plurality of plated holes are formed through the second metal dielectric, the first substrate, and the first metal dielectric, a region from the first metal dielectric to the second metal dielectric is formed based on the plurality of plated holes, at least one slot is disposed in the second metal dielectric, the at least one slot is located in the region, at least one radiation patch is disposed on an upper surface of the second substrate, and the at least one slot corresponds to the at least one radiation patch.

According to the series-fed antenna provided in this embodiment of this application, because a structure of the antenna includes the at least one radiation patch, the plurality of plated holes, and the at least one slot, a dual-resonance working manner is formed by using the region formed based on the plurality of plated holes, the slot, and the radiation patch on the upper surface of the second substrate, and further a wideband feature can be implemented. In addition, the antenna has a simple structure and occupies a small area.

With reference to the first aspect, in some possible implementations of the first aspect, the antenna is a standing wave antenna.

According to this technical solution provided in this application, because the standing wave antenna is used, beam dispersion can be avoided, and therefore system processing costs and algorithm processing complexity can be reduced.

With reference to the first aspect, in some implementations of the first aspect, the at least one radiation patch covers the at least one slot.

According to the series-fed antenna provided in this embodiment of this application, because the at least one radiation patch covers the at least one slot, a signal transmitted by an excitation source may pass through the at least one slot, so that the signal passing through the at least one slot may be coupled to the radiation patch. Therefore, the wideband feature can be better implemented.

The excitation source in this embodiment of this application may transmit a signal, for example, may be a power supply chip, may be a Bluetooth chip, or may be a wireless fidelity (wireless fidelity, Wi-Fi) chip. This is not specifically limited in this application. This application is applicable to any chip that can transmit a signal.

With reference to the first aspect, in some implementations of the first aspect, the region is a circled region that is formed based on the plurality of plated holes, and an SIW channel is formed in the circled region.

The SIW channel in this embodiment of this application is located in the circled region formed based on the plurality of plated holes, and the SIW channel may bind, inside the substrate, the signal sent by the excitation source, so that a loss of the signal can be reduced.

With reference to the first aspect, in some implementations of the first aspect, distances between adjacent plated holes in the plurality of plated holes are equal.

With reference to the first aspect, in some implementations of the first aspect, the at least one slot includes a plurality of slots, the plurality of slots are arranged in a vertical direction, the vertical direction is a direction of a first side edge of the second metal dielectric, and the plurality of slots have different areas. On a premise that the second metal dielectric is three-dimensional and has three dimensions: a length, a width, and a height (where the height may be understood as a thickness of the metal dielectric), the first side edge may be a length edge or a width edge of the second metal dielectric.

With reference to the first aspect, in some implementations of the first aspect, the areas of the plurality of slots enable a difference between main lobe energy and side lobe energy that are radiated by the at least one radiation patch to be greater than or equal to a first preset threshold.

According to this technical solution in this embodiment of this application, the areas of the plurality of slots may be adjusted to achieve an expected difference between the main lobe energy and the side lobe energy, so that a low side lobe can be implemented.

With reference to the first aspect, in some implementations of the first aspect, the at least one slot includes the plurality of slots, and the plurality of slots have different offsets relative to a center of the region.

With reference to the first aspect, in some implementations of the first aspect, the offsets of the plurality of slots relative to the center of the region enable the difference between the main lobe energy and the side lobe energy that are radiated by the at least one radiation patch to be greater than or equal to the first preset threshold.

According to this technical solution in this embodiment of this application, the offsets of the plurality of slots relative to the center of the region may be adjusted to achieve the expected difference between the main lobe energy and the side lobe energy, so that the low side lobe can be implemented.

With reference to the first aspect, in some implementations of the first aspect, the at least one radiation patch includes a plurality of radiation patches, and the plurality of radiation patches have different areas.

With reference to the first aspect, in some implementations of the first aspect, the areas of the plurality of radiation patches enable the difference between the main lobe energy and the side lobe energy that are radiated by the plurality of radiation patches to be greater than or equal to the first preset threshold.

According to this technical solution in this embodiment of this application, the areas of the plurality of radiation patches may be adjusted to achieve the expected difference between the main lobe energy and the side lobe energy, so that the low side lobe can be implemented.

With reference to the first aspect, in some implementations of the first aspect, the at least one radiation patch includes the plurality of radiation patches, a distance between centers of different patches in the plurality of radiation patches is an integer multiple of a half of a waveguide wavelength of the channel, and the channel is a waveguide channel.

With reference to the first aspect, in some implementations of the first aspect, the at least one radiation patch includes a plurality of radiation patch groups that are arranged in the vertical direction, a distance between different radiation patch groups in the plurality of radiation patch groups is a second preset threshold, and the vertical direction is the direction of the first side edge of the second metal dielectric.

With reference to the first aspect, in some implementations of the first aspect, parasitic patches are disposed on upper and lower sides of the radiation patch in the direction of the first side edge of the second metal dielectric.

According to this technical solution provided in this embodiment of this application, because the parasitic patches are disposed on the upper and lower sides of the radiation patch in the direction of the first side edge of the second metal dielectric, the wideband feature can be further implemented by using the region formed based on the plurality of plated holes, the slot, the radiation patch, and the parasitic patches.

With reference to the first aspect, in some implementations of the first aspect, the antenna further includes: a third substrate, where the third substrate is disposed above the radiation patch, and at least one radiation patch is disposed on an upper surface of the third substrate.

According to this solution provided in this embodiment of this application, because the structure of the antenna includes the third substrate and the radiation patch on the third substrate, a multi-resonance working manner is formed by using the region formed based on the plurality of plated holes, the slot, the radiation patch on the upper surface of the second substrate, and the radiation patch on the upper surface of the third substrate, so that the wideband feature can be further implemented.

According to a second aspect, a communication device is provided. The device includes the series-fed antenna according to any one of the first aspect or the implementations of the first aspect.

According to the third aspect, a series-fed antenna manufacturing method is provided. The method includes: disposing a first metal dielectric on a lower surface of a first substrate; and disposing a second substrate above the first substrate, where a second metal dielectric is disposed between the second substrate and the first substrate, a plurality of plated holes are formed through the second metal dielectric, the first substrate, and the first metal dielectric, a region from the first metal dielectric to the second metal dielectric is formed based on the plurality of plated holes, at least one slot is disposed in the second metal dielectric, the at least one slot is located in the region, at least one radiation patch is disposed on an upper surface of the second substrate, and the at least one slot corresponds to the at least one radiation patch.

With reference to the third aspect, in some implementations of the third aspect, that the at least one slot corresponds to the at least one radiation patch includes: the at least one slot has a one-to-one correspondence with the at least one radiation patch; each of the at least one slot corresponds to at least one radiation patch; or each of the at least one radiation patch corresponds to at least one slot.

With reference to the third aspect, in some implementations of the third aspect, the at least one radiation patch covers the at least one slot.

With reference to the third aspect, in some implementations of the third aspect, the region is a circled region that is formed based on the plurality of plated holes, and an SIW channel is formed in the circled region.

With reference to the third aspect, in some implementations of the third aspect, distances between adjacent plated holes in the plurality of plated holes are equal.

With reference to the third aspect, in some implementations of the third aspect, the at least one slot includes a plurality of slots, the plurality of slots are arranged in a vertical direction, the vertical direction is a direction of a first side edge of the second metal dielectric, and the plurality of slots have different areas.

With reference to the third aspect, in some implementations of the third aspect, the areas of the plurality of slots enable a difference between main lobe energy and side lobe energy that are radiated by the at least one radiation patch to be greater than or equal to a first preset threshold.

With reference to the third aspect, in some implementations of the third aspect, the at least one slot includes the plurality of slots, and the plurality of slots have different offsets relative to a center of the region.

With reference to the third aspect, in some implementations of the third aspect, the offsets of the plurality of slots relative to the center of the region enable the difference between the main lobe energy and the side lobe energy that are radiated by the at least one radiation patch to be greater than or equal to the first preset threshold.

With reference to the third aspect, in some implementations of the third aspect, the at least one radiation patch includes a plurality of radiation patches, and the plurality of radiation patches have different areas.

With reference to the third aspect, in some implementations of the third aspect, the areas of the plurality of radiation patches enable the difference between the main lobe energy and the side lobe energy that are radiated by the plurality of radiation patches to be greater than or equal to the first preset threshold.

With reference to the third aspect, in some implementations of the third aspect, the at least one radiation patch includes the plurality of radiation patches, a distance between centers of different patches in the plurality of radiation patches is an integer multiple of a half of a waveguide wavelength of the channel, and the channel is a waveguide channel.

With reference to the third aspect, in some implementations of the third aspect, the at least one radiation patch includes a plurality of radiation patch groups that are arranged in the vertical direction, a distance between different radiation patch groups in the plurality of radiation patch groups is a second preset threshold, and the vertical direction is the direction of the first side edge of the second metal dielectric.

With reference to the third aspect, in some implementations of the third aspect, parasitic patches are disposed on upper and lower sides of the radiation patch in the direction of the first side edge of the second metal dielectric.

With reference to the third aspect, in some implementations of the third aspect, the method further includes: disposing a third substrate above the radiation patch, where at least one radiation patch is disposed on an upper surface of the third substrate.

According to a fourth aspect, a radar is provided. The radar includes the series-fed antenna according to any one of the first aspect or the implementations of the first aspect.

### BRIEF DESCRIPTION OF DRAWINGS

FIG. 1 is a function block diagram of a vehicle 100 according to an embodiment of this application;
FIG. 2 is a schematic diagram of antennas according to an embodiment of this application;
FIG. 3 is a schematic structural diagram of a series-fed antenna according to an embodiment of this application;
FIG. 4 is a schematic diagram of a parameter S of an antenna according to an embodiment of this application;
FIG. 5 is a schematic structural diagram of top views of series-fed antennas according to another embodiment of this application;
FIG. 6 is a schematic structural diagram of a top view of a series-fed antenna according to still another embodiment of this application;
FIG. 7 is a schematic diagram of energy radiated by a radiation patch according to an embodiment of this application;
FIG. 8 is a schematic structural diagram of a top view of a series-fed antenna according to still another embodiment of this application;
FIG. 9 is a schematic structural diagram of a top view of a series-fed antenna according to still another embodiment of this application;
FIG. 10 is a schematic structural diagram of a front view of a series-fed antenna according to another embodiment of this application;
FIG. 11 is a schematic structural diagram of a communication device according to an embodiment of this application; and
FIG. 12 is a schematic flowchart of manufacturing a series-fed antenna according to an embodiment of this application.

### DETAILED DESCRIPTION OF EMBODIMENTS

The following describes technical solutions of this application with reference to the accompanying drawings. Clearly, the described embodiments are some but not all of the embodiments of this application. All other embodiments obtained by a person of ordinary skill in the art based on the embodiments of this application without creative efforts shall fall within the protection scope of this application.

The technical solutions of the embodiments of this application may be applied to various automotive radar antennas, for example, may be applied to an automotive radar antenna with a frequency of 24 GHz or 77 GHz; or may be applied to a medical imaging antenna, a communication base station antenna, a satellite antenna, or the like. This is not specifically limited in this application.

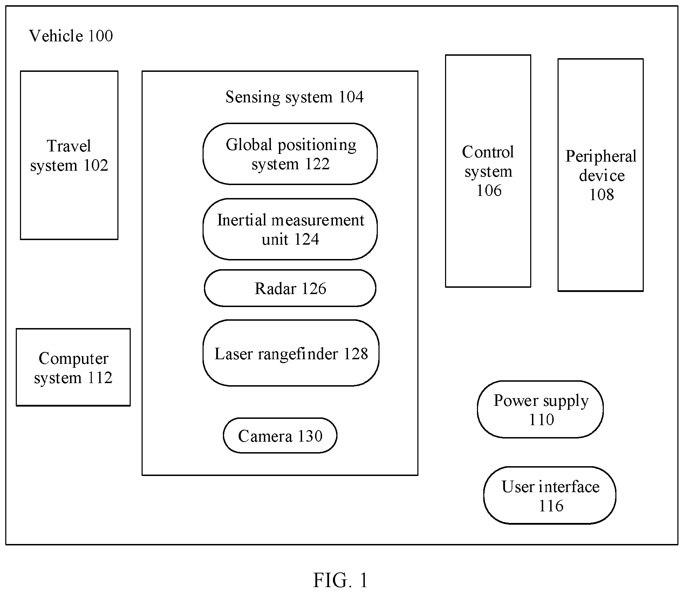

The automotive radar antenna is used as an example. FIG. 1 is a function block diagram of a vehicle 100 according to an embodiment of this application.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of elements. In addition, each subsystem and element of the vehicle 100 may be interconnected in a wired or wireless manner.

The sensor system 104 may include several sensors that sense information about an ambient environment of the vehicle 100. For example, the sensor system 104 may include a positioning system 122 (where the positioning system may be a GPS system, a BeiDou system, or another positioning system), an inertial measurement unit (inertial measurement unit, IMU) 124, a radar 126, a laser rangefinder 128, and a camera 130. The sensor system 104 may further include sensors (for example, an in-vehicle air quality monitor, a fuel gauge, and an oil temperature gauge) in an internal system of the monitored vehicle 100. Sensor data from one or more of these sensors can be used to detect an object and corresponding features (a position, a shape, a direction, a speed, and the like) of the object. Such detection and identification are key functions of a safe operation of the autonomous vehicle 100.

The positioning system 122 may be configured to estimate a geographical location of the vehicle 100. The IMU 124 is configured to sense location and orientation changes of the vehicle 100 based on inertial acceleration. In an embodiment, the IMU 124 may be a combination of an accelerometer and a gyroscope.

The radar 126 may sense an object in the ambient environment of the vehicle 100 by using an electromagnetic wave signal. In some embodiments, in addition to sensing the object, the radar 126 may be further configured to sense a speed and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

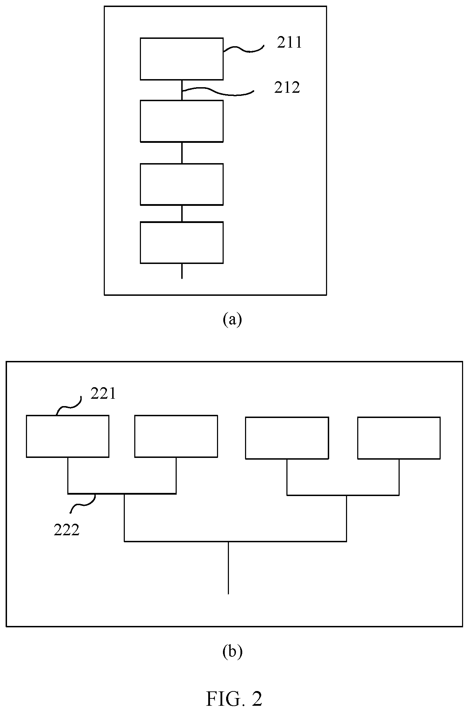

The radar 126 mentioned above may include an antenna that is series-fed (which may be referred to as a series-fed antenna for short) or an antenna that is corporate-fed (which may be referred to as a corporate-fed antenna for short). (a) and (b) in FIG. 2 are respectively a schematic diagram of a series-fed antenna and a schematic diagram of a corporate-fed antenna.

With reference to (a) in FIG. 2, the series-fed antenna may include a patch 211 and a feeder 212, where a plurality of patches 211 may be connected in series by using the feeder 212. With reference to (b) in FIG. 2, the corporate-fed antenna may include a patch 221 and a feeder 222, where a plurality of patches 221 may be connected in parallel by using the feeder 222.

The series-fed antenna has a relatively simple feeder structure and occupies a relatively small area, and the feeder of the series-fed antenna causes lower radiation. The series-fed antenna may include a series-fed standing wave antenna and a series-fed traveling wave antenna, where the series-fed standing wave antenna is characterized by relatively narrow bandwidth.

To implement a wideband series-fed antenna, in an implementation, a multi-layer stacked structure may be used. Through disposition of two or even more layers of patches, at least two in-band resonance points can be implemented, so that required bandwidth can be covered. However, in this implementation, a plurality of layers of PCBs are required to be stacked. Consequently, implementation is complex and costs are relatively high.

In another implementation, a series-fed traveling wave antenna may be used. A working feature of the series-fed traveling wave antenna is an energy dissipation working mode. For a relatively wide frequency band range, a difference in energy dissipation is relatively small. Therefore, wideband working can be implemented. However, in this implementation, when the series-fed traveling wave antenna is used, clear beam dispersion occurs. That is, there is a difference between beam directions at different frequencies. For example, during application of a radar, beam dispersion may cause a detection target to be lost with frequency switching. In addition, in most radars or communication systems, beam dispersion increases system processing costs and algorithm processing complexity. In addition, for the series-fed traveling wave antenna, if end matched load is not used, usually, more antenna units are required, and more PCB areas are occupied.

This application provides a series-fed antenna, to improve operating bandwidth of a series-fed antenna. In addition, the series-fed antenna has a simple structure and occupies a small area.

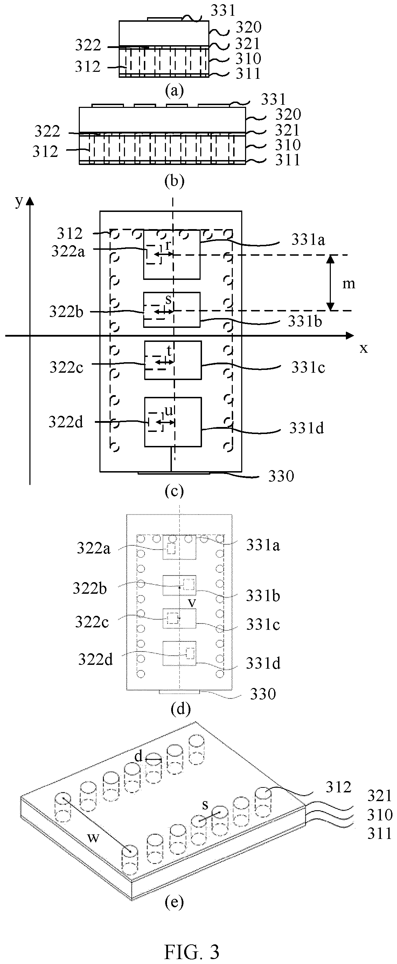

FIG. 3 is a schematic diagram of the series-fed antenna 300 according to an embodiment of this application. (a) in FIG. 3 is a front view of the series-fed antenna according to this embodiment of this application, (b) in FIG. 3 is a side view of the series-fed antenna according to this embodiment of this application, and (c) in FIG. 3 is a top view of the series-fed antenna according to this embodiment of this application.

As shown in (a) in FIG. 3, the series-fed antenna 300 may include at least one first substrate 310, at least one second substrate 320, a first metal dielectric 311, a second metal dielectric 321, at least one plated hole 312, at least one slot 322, and at least one radiation patch 331. It should be noted that the metal dielectric herein may also be referred to as a metal layer.

The first metal dielectric 311 is disposed on a lower surface of the first substrate 310.

The second substrate 320 is disposed above the first substrate 310, the second metal dielectric 321 is disposed between the second substrate 320 and the first substrate 310, a plurality of plated holes 312 are formed through the second metal dielectric 321, the first substrate 310, and the first metal dielectric 311, a region from the first metal dielectric 311 to the second metal dielectric 321 is formed based on the plurality of plated holes 312, the at least one slot 322 is disposed in the second metal dielectric 321, the at least one slot 322 is located in the region, the at least one radiation patch 331 is disposed on an upper surface of the second substrate 320, and the at least one slot 322 corresponds to the at least one radiation patch 331.

The plated hole 312 in this embodiment of this application is a hole that has a conductive function, or is referred to as a conductive hole, for example, may be a laser hole or a mechanical hole. This is not specifically limited in this application.

In this embodiment of this application, the region that is from the first metal dielectric 311 to the second metal dielectric 321 and that is formed based on the plurality of plated holes 312 may be a region that has a shape of a Chinese character "∩" and that is formed based on the plurality of plated holes 312, for example, a region in (c) in FIG. 3 that is circled by dashed lines around the plurality of plated holes 312.

In addition, a channel in the region formed based on the plurality of plated holes 312 may be referred to as a substrate integrated waveguide (substrate integrated waveguide, SIW) channel, or may be referred to as another type of channel. This is not specifically limited in this application. This application is applicable to any channel that is formed based on the plurality of plated holes and that can bind a signal or energy.

The SIW channel in this application may be a channel that is in a region formed based on plated holes formed through a dielectric and a substrate, and may be a channel used for microwave transmission. Field propagation of a waveguide may be implemented in the dielectric by using the plated hole.

The first substrate 310 and the second substrate 320 in this embodiment of this application may be PCBs. The first metal dielectric 311 and/or the second metal dielectric 321 in this embodiment of this application may be copper sheets/a copper sheet, or may be another conductive substance. This should not be construed as a particular limitation on this application.

In addition, the radiation patch 331 in this embodiment of this application may radiate a signal; and for example, may be a copper sheet or a copper foil, or another conductive substance. This is not specifically limited in this application. This application is applicable to any patch that can radiate a signal.

In some embodiments, the radiation patch 331 may be referred to as a primary radiation patch, or may be referred to as another patch. This is not limited. The primary radiation patch in this application may be the patch on the second substrate 320. In other words, the primary radiation patch may be a patch that is relatively close to the at least one slot 322. For ease of differentiation, at least one radiation patch may be disposed on a third substrate below. The at least one radiation patch on the third substrate is relatively far away from the at least one slot 322, and may be referred to as a secondary radiation patch.

It should be noted that the primary radiation patch and the secondary radiation patch in this application are relative. A distance between the at least one radiation patch 331 on the second substrate and the at least one slot 322 is shorter than a distance between the at least one radiation patch on the third substrate and the at least one slot 322, and therefore, the at least one radiation patch 331 on the second substrate may be referred to as a primary radiation patch. The distance between the at least one radiation patch on the third substrate and the at least one slot 322 is longer than the distance between the at least one radiation patch 331 on the second substrate and the at least one slot 322, and therefore, the at least one radiation patch on the third substrate may be referred to as a secondary radiation patch.

The first metal dielectric 311, the second metal dielectric 321, and the radiation patch 331 in the embodiments of this application may be coated on surfaces of substrates. For example, the first metal dielectric 311 may be coated on the lower surface of the first substrate 310, the second metal dielectric 321 may be coated on an upper surface of the first substrate 310, and the radiation patch 331 may be coated on the upper surface of the second substrate 320.

It may be understood that the upper surface or the lower surface in the embodiments of this application is relative. For example, the second metal dielectric is coated on the upper surface of the first substrate. For the first substrate, the second metal dielectric is located on the upper surface of the first substrate; for the second substrate, the second metal dielectric is located on a lower surface of the second substrate. In other words, the upper surface may be replaced with "a first surface", and the lower surface may be replaced with "a second surface", to distinguish between two surfaces of the substrate in different directions.

In the embodiments of this application, the first metal dielectric 311, the second metal dielectric 321, and the radiation patch 331 that are coated on the surfaces of the substrates may be relatively thin, and have millimeter-level or micrometer-level thicknesses. This is not limited.

In the embodiments of this application, the second substrate 320 is disposed above the first substrate 310. As shown in (a) in FIG. 3, the second substrate 320 may be disposed right above the first substrate 310. In some embodiments, the second substrate 320 may not be disposed right above the first substrate 310. For example, the second substrate 320 may be disposed obliquely leftward or rightward above the first substrate 310.

In the embodiments of this application, the region that is from the first metal dielectric 311 to the second metal dielectric 321 and that is formed based on the plurality of plated holes 312 may bind, inside the substrate, a signal transmitted by an excitation source. In addition, the signal transmitted by the excitation source may pass through the at least one slot 322 disposed in the second metal dielectric 321 in the region, so that a part of signals passing through the at least one slot 322 may be coupled to the radiation patch 331 by using the at least one slot 322. Because the at least one radiation patch 331 and the at least one slot 322 have different parameters, for example, have different inductive and/or capacitive parameters, a dual-resonance working manner is formed, and two in-band resonance points and a wideband feature are implemented.

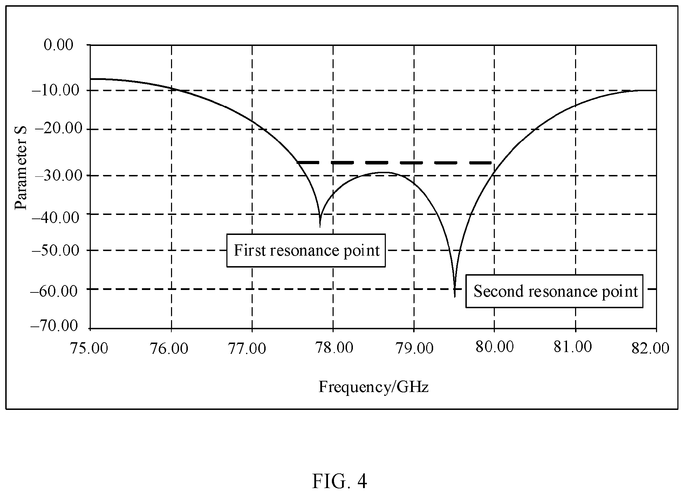

FIG. 4 is a schematic diagram of a parameter S of the series-fed antenna according to an embodiment of this application. It can be learned from the figure that there are two resonance points, which are separately a first resonance point 77.8 GHz and a second resonance point 79.5 GHz. In other words, a frequency band N77.8 and a frequency band N79.5 may be supported. In addition, because a curve of the parameter S includes the two resonance points, a covered frequency range is wider under the same parameter S, and the wideband feature can be implemented.

According to the series-fed antenna provided in the embodiments of this application, because the structure of the antenna includes the at least one radiation patch, the plurality of plated holes, and the at least one slot, the dual-resonance working manner is formed by using the region formed based on the plurality of plated holes, the slot, and the radiation patch on the upper surface of the second substrate, and further the wideband feature can be implemented. In addition, the antenna has a simple structure and occupies a small area.

Optionally, in some embodiments, the antenna is a standing wave antenna.

Standing wave in the embodiments of this application may be a distribution state of two waves along a transmission line, where the two waves have a same frequency but opposite transmission directions. One of the two waves may be a reflected wave of the other wave.

In a specific example of the technical solutions provided in this application, a used antenna is a standing wave antenna, so that beam dispersion can be avoided, and therefore system processing costs and algorithm processing complexity can be reduced.

Optionally, in some embodiments, that the at least one slot 322 corresponds to the at least one radiation patch 331 includes: the at least one slot 322 has a one-to-one correspondence with the at least one radiation patch 331; each of the at least one slot 322 corresponds to at least one radiation patch 331; or each of the at least one radiation patch 331 corresponds to at least one slot 322.

In the embodiments of this application, a correspondence between quantities of the at least one slot 322 and the at least one radiation patch 331 is not limited. For example, it is assumed that the at least one slot 322 is k slots, and the at least one patch is j patches. In this case, the k slots may have a one-to-one correspondence with the j patches; each of the k slots may correspond to at least one of the j patches; or each of the j radiation patches may correspond to at least one of the k slots.

Optionally, in some embodiments, the at least one radiation patch covers the at least one slot.

It should be noted that coverage herein may be complete coverage or partial coverage. This is not limited. For example, each of the at least one radiation patch may completely cover one or more slots; each of the at least one radiation patch may partially cover one or more slots; a part of the at least one radiation patch may completely cover one or more slots; or a part of the at least one radiation patch may partially cover one or more slots.

For example, as shown in (c) in FIG. 3, each of the at least one radiation patch may cover one slot. For example, a radiation patch 331a may cover a slot 322a, a radiation patch 331b may cover a slot 322b, a radiation patch 331c may cover a slot 322c, and a radiation patch 331d may cover a slot 322d.

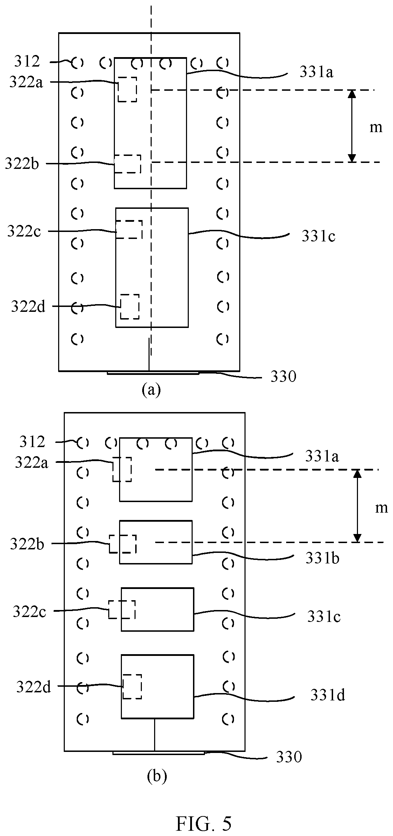

In some embodiments, each of the at least one radiation patch may cover a plurality of slots. For example, (a) in FIG. 5 is a top view of the series-fed antenna according to another embodiment of this application. A radiation patch 331a may cover slots 322a and 322b, and a radiation patch 331c may cover slots 322c and 322d.

In some embodiments, a part of the at least one radiation patch may not completely cover at least one slot. (b) in FIG. 5 is a top view of the series-fed antenna according to still another embodiment of this application. With reference to (b) in FIG. 5, a part of radiation patches do not completely cover a slot. For example, a radiation patch 331a may not completely cover a slot 322a, a radiation patch 331b may not completely cover a slot 322b, and a radiation patch 331c may not completely cover a slot 322c.

According to the series-fed antenna provided in the embodiments of this application, because the at least one radiation patch covers the at least one slot, the signal transmitted by the excitation source may pass through the at least one slot, so that the signal passing through the at least one slot may be coupled to the radiation patch. Therefore, the wideband feature can be better implemented.

The excitation source in the embodiments of this application may transmit a signal, for example, may be a power supply chip, may be a Bluetooth chip, or may be a Wi-Fi chip. This is not specifically limited in this application. This application is applicable to any chip that can transmit a signal.

Optionally, in some embodiments, the region is a circled region that is formed based on the plurality of plated holes, and the SIW channel is formed in the circled region.

The circled region in the embodiments of this application may be a closed circled region, or may be a semi-closed circled region, for example, may be referred to as a semi-circled region. As shown in (c) in FIG. 3, the circled region is a semi-closed circled region formed by the dashed lines around the plurality of plated holes 312, and the SIW channel may be formed in the region. The SIW channel may bind, inside the substrate, the signal sent by the excitation source.

It should be noted that the semi-circled region in the embodiments of this application may be the region circled by the dashed lines around the plurality of plated holes 312. The region may be understood as a region that has a shape similar to a Chinese character "∩", so that the signal sent by the excitation source may enter the semi-closed region.

The SIW channel in the embodiments of this application is located in the circled region formed based on the plurality of plated holes, and the SIW channel may bind, inside the substrate, the signal sent by the excitation source, so that a loss of the signal can be reduced.

Optionally, in some embodiments, distances between adjacent plated holes in the plurality of plated holes are equal.

Optionally, in some embodiments, a distance between centers of adjacent holes in the plurality of plated holes satisfies the following relationship: s/d<2 and d/w<0.1, where s is the distance between the centers of the adjacent holes, d is a diameter of the hole, w is a width of the substrate integrated waveguide SIW channel, and the width w of the channel is a distance (as shown in (e) in FIG. 3), in a horizontal direction, between centers of two plated holes in the SIW.

In the embodiments of this application, as shown in (c) in FIG. 3, the distances between the adjacent plated holes in the plurality of plated holes are equal. For example, the plurality of plated holes in the embodiments of this application may be formed based on a preset threshold, and the distance between the adjacent plated holes may be set to the preset threshold.

It should be understood that ideally, the distances between the adjacent plated holes may be equal, but a design process error may also be allowed.

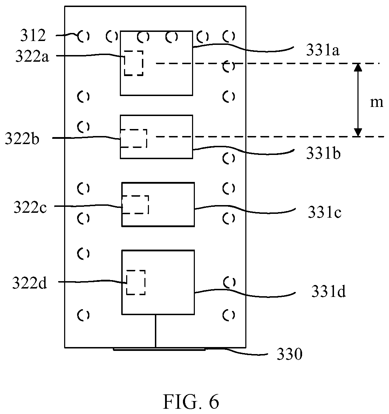

In some embodiments, the distances between the adjacent plated holes in the plurality of plated holes may alternatively be not equal. FIG. 6 is a top view of the series-fed antenna according to another embodiment of this application. With reference to FIG. 6, it can be learned that not all the distances between the adjacent plated holes are equal to a fixed value.

The foregoing describes that the wideband feature can be implemented by using the region formed based on the plurality of plated holes, the slot, and the radiation patch on the upper surface of the second substrate. In some cases, side lobe energy radiated by the radiation patch is relatively high. Therefore, a low side lobe may be implemented by using different measures. Details are described below.

Optionally, in some embodiments, the at least one slot 322 includes a plurality of slots, the plurality of slots are arranged in a vertical direction, the vertical direction is a direction of a first side edge of the second metal dielectric 321, and the plurality of slots have different areas.

The vertical direction in the embodiments of this application may be the direction of the first side edge of the second metal dielectric 321, and the first side edge in this application may be a length edge or a width edge of the second metal dielectric 321. As shown in (c) in FIG. 3, a y-axis is a direction of the length edge of the second metal dielectric 321. In other words, a direction of the y-axis may be the vertical direction in this application. Further, on a premise that the second metal dielectric has a specific thickness (not shown in (c) in FIG. 3), the thickness may be understood as a height of the second metal dielectric, and the first side edge is still the length edge or the width edge of the second metal dielectric.

In some embodiments, the vertical direction in this application may also be referred to as a direction of the region formed based on the plurality of plated holes. For example, the direction of the region may be the direction of the y-axis shown in (c) in FIG. 3. The horizontal direction is a direction that is perpendicular to the vertical direction, and may also be understood as a direction of an x-axis.

In the embodiments of this application, that the plurality of slots have different areas may mean that any two slots have different areas, or that at least two of the plurality of slots have different areas. This is not limited.

Optionally, in some embodiments, the areas of the plurality of slots enable a difference between main lobe energy and the side lobe energy that are radiated by the at least one radiation patch to be greater than or equal to a first preset threshold.

Specifically, in the embodiments of this application, the areas of the plurality of slots may be set to be different, so that the difference between the main lobe energy and the side lobe energy that are radiated by the at least one radiation patch is greater than or equal to the first preset threshold.

For example, as shown in (c) in FIG. 3, there are four slots: the slot 322a, the slot 322b, the slot 322c, and the slot 322d. In this application, the four slots may have different areas. For example, at least two of the four slots may have different areas, for example, the slot 322a and the slot 322b have different areas.

Certainly, the four slots may all have different areas, or every two of the four slots may have a same area. Herein, that every two have a same area means that the plurality of slots include a plurality of groups of slots, where two slots included in each of the plurality of groups of slots have a same area. For example, the slots 322a, 322b, 322c, and 322d all have different areas; or the slots 322a and 322d have a same area and the slots 322b and 322c have a same area.

When every two of the four slots have a same area, areas of every two slots that are symmetrical along a central axis in the horizontal direction may be set to be the same. As shown in (c) in FIG. 3, the central axis may be the x-axis in (c) in FIG. 3. In this case, the slots 322a and 322d may have a same area, and the slots 322b and 322c may have a same area.

Similarly, if the series-fed antenna includes six or more slots, two slots that are symmetrical along the central axis in the horizontal direction may also have a same area. Details are not described herein again.

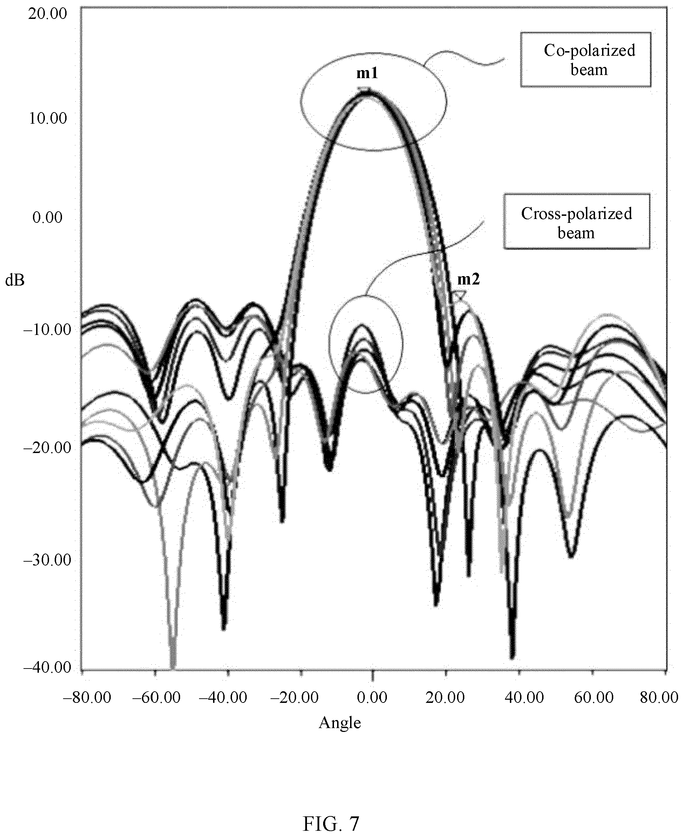

In the embodiments of this application, the difference between the main lobe energy and the side lobe energy that are radiated by the radiation patch may be adjusted by setting different areas of the plurality of slots. FIG. 7 is a schematic diagram of energy radiated by the radiation patch according to an embodiment of this application.

FIG. 7 shows a co-polarized beam and a cross-polarized beam. In the embodiments of this application, a radiation direction of the co-polarized beam may be a radiation direction with maximum electric field strength, and a radiation direction of the cross-polarized beam is a direction perpendicular to the radiation direction of the co-polarized beam. In addition, cross-polarization is usually not expected to be generated.

Usually, a larger difference between energy radiated by the co-polarized beam and energy radiated by the cross-polarized beam is better, so that the low side lobe can be implemented.

The first preset threshold in the embodiments of this application may be set based on a process requirement, or may be set based on a factory setting. This is not limited.

As shown in FIG. 7, a value of m1 may be a value of the main lobe energy radiated by the radiation patch, and a value of m2 may be a value of the side lobe energy radiated by the radiation patch. It is assumed that the first preset threshold is set to 18 dB, that is, the difference between the main lobe energy and the side lobe energy that are radiated by the radiation patch is greater than or equal to 18 dB. In this application, an example in which the difference between the main lobe energy and the side lobe energy that are radiated by the patch is 18 dB is used for description. If the difference between the main lobe energy and the side lobe energy that are radiated by the radiation patch is expected to be 18 dB, an excitation amplitude ratio may be roughly set to 0.18:0.32 (assuming that there are four antenna units). Based on this, the expected difference between the main lobe energy and the side lobe energy may be achieved by adjusting the areas of the plurality of slots, so that the low side lobe is implemented.

Specifically, adjustment may be performed based on the following rule. That is, a larger area of the slot indicates stronger radiation energy.

It should be understood that the foregoing value is merely an example for description, may alternatively be another value, and should not be construed as a particular limitation on this application.

It should be further understood that a shape of the slot in the embodiments of this application may not be limited to that shown in (c) in FIG. 3, for example, may alternatively be a circular shape, an elliptical shape, a square shape, or another irregular shape. This is not specifically limited in this application.

Optionally, in some embodiments, the at least one slot 322 includes the plurality of slots, and the plurality of slots have different offsets relative to a center of the region.

Further, the plurality of slots may be distributed on a same side or different sides (where this may be understood as that the plurality of slots are disposed on two sides of the center of the region, and an arrangement manner is not specifically limited) relative to the center of the region. In a design, the plurality of slots are located on a same side relative to the center of the region, and a distance between centers of adjacent slots is an even multiple of a half of a waveguide wavelength of the channel, for example, twice the half of the waveguide wavelength of the channel. In another design, the plurality of slots are located on different sides relative to the center of the region, and a distance between centers of adjacent slots is an odd multiple of a half of a waveguide wavelength of the channel, for example, once the half of the waveguide wavelength of the channel.

As shown in (c) in FIG. 3, there are four slots: the slot 322a, the slot 322b, the slot 322c, and the slot 322d, and the four slots are all located on a same side of the center of the region. As shown in (d) in FIG. 3, there are also four slots: a slot 322a, a slot 322b, a slot 322c, and a slot 322d, and the four slots are located on different sides of the center of the region, where the slots 322a and 322c are located on a same side, and the slots 322c and 322d are located on the other side of the center of the region. It should be noted that for distribution on different sides, the four slots may alternatively be cross-arranged on one side and the other side. For example, the slots 322a and 322b are located on a same side, and the slots 322c and 322d are located on the other side of the center of the region. Based on this, different arrangement manners of the plurality of slots on a same side or different sides of the center of the region may be used in this application.

In the embodiments of this application, the distance between the centers of the adjacent slots may be a distance between the centers of the adjacent slots in a direction of the center of the region (that is, the vertical direction mentioned in this application, which is perpendicular to the horizontal direction), for example, a value of v shown in (d) in FIG. 3.

In the embodiments of this application, that the plurality of slots have different offsets relative to the center of the region formed based on the plurality of plated holes may mean that any two slots have different offsets relative to the center of the region formed based on the plurality of plated holes, or that at least two of the plurality of slots have different offsets relative to the center of the region formed based on the plurality of plated holes. This is not limited.

Optionally, in some embodiments, the offsets of the plurality of slots relative to the center of the region enable the difference between the main lobe energy and the side lobe energy that are radiated by the at least one radiation patch to be greater than or equal to the first preset threshold.

Specifically, in the embodiments of this application, the offsets of the plurality of slots relative to the center of the region may be set to be different, so that the difference between the main lobe energy and the side lobe energy that are radiated by the at least one radiation patch is greater than or equal to the first preset threshold.

For example, as shown in (c) in FIG. 3, there are four slots: the slot 322a, the slot 322b, the slot 322c, and the slot 322d. In this application, the four slots may have different offsets relative to the center of the region. For example, at least two of the four slots may have different offsets relative to the center of the region, for example, the slot 322a and the slot 322b have different offsets relative to the center of the region.

Certainly, the four slots may all have different offsets relative to the center of the region, or every two of the four slots may have a same offset relative to the center of the region. For example, the slots 322a, 322b, 322c, and 322d all have different offsets relative to the center of the region; or the slots 322a and 322d have a same offset relative to the center of the region and the slots 322b and 322c have a same offset relative to the center of the region.

In the embodiments of this application, the offsets of the plurality of slots relative to the center of the region may be offsets of centers of the slots relative to the center of the region, for example, values of r, s, t, and u shown in (c) in FIG. 3.

When every two of the four slots have a same offset relative to the center of the region, every two slots that are symmetrical along the central axis in the horizontal direction may have a same offset relative to the center of the region. As shown in (c) in FIG. 3, the central axis may be the x-axis in (c) in FIG. 3. In this case, the slots 322a and 322d may have a same offset relative to the center of the region, and the slots 322b and 322c may have a same offset relative to the center of the region.

Similarly, if the series-fed antenna includes six or more slots, every two slots that are symmetrical along the central axis in the horizontal direction may also have a same offset relative to the center of the region. Details are not described herein again.

In the embodiments of this application, the difference between the main lobe energy and the side lobe energy that are radiated by the radiation patch may be adjusted by setting different offsets of the plurality of slots relative to the center of the region. For example, it is assumed that the first preset threshold is set to 18 dB, that is, the difference between the main lobe energy and the side lobe energy that are radiated by the radiation patch is greater than or equal to 18 dB. In this application, an example in which the difference between the main lobe energy and the side lobe energy that are radiated by the patch is 18 dB is used for description. If the difference between the main lobe energy and the side lobe energy that are radiated by the radiation patch is expected to be 18 dB, the excitation amplitude ratio may be roughly set to 0.18:0.32 (assuming that there are four antenna units). Based on this, the expected difference between the main lobe energy and the side lobe energy may be achieved by adjusting the offsets of the slots relative to the center of the region, so that the low side lobe is implemented.

Specifically, adjustment may be performed based on the following rule. That is, a larger offset of the slot relative to the center of the region indicates stronger radiation energy.

It may be understood that, the expected difference between the main lobe energy and the side lobe energy that are radiated by the radiation patch may be achieved by setting only different offsets of the plurality of slots relative to the center of the region. Alternatively, the expected difference between the main lobe energy and the side lobe energy that are radiated by the radiation patch may be achieved with reference to different areas of the plurality of slots. This is not specifically limited in this application.

Optionally, in some embodiments, the at least one radiation patch includes a plurality of radiation patches, and the plurality of radiation patches have different areas.

In the embodiments of this application, that the plurality of radiation patches have different areas may mean that any two radiation patches have different areas, or that at least two of the plurality of radiation patches have different areas. This is not limited.

Optionally, in some embodiments, the areas of the plurality of radiation patches enable the difference between the main lobe energy and the side lobe energy that are radiated by the at least one radiation patch to be greater than or equal to the first preset threshold.

Specifically, in the embodiments of this application, the areas of the plurality of radiation patches may be set to be different, so that the difference between the main lobe energy and the side lobe energy that are radiated by the at least one radiation patch is greater than or equal to the first preset threshold.

For example, as shown in (c) in FIG. 3, there are four patches: the radiation patch 331a, the radiation patch 331b, the radiation patch 331c, and the radiation patch 331d. In this application, the four radiation patches may have different areas. For example, at least two of the four radiation patches may have different areas, for example, the radiation patch 331a and the radiation patch 331b have different areas.

Certainly, the four radiation patches may all have different areas, or every two of the four radiation patches may have a same area. For example, the radiation patches 331a, 331b, 331c, and 331d may all have different areas; or the radiation patches 331a and 331d may have a same area and the radiation patches 331b and 331c may have a same area.

When every two of the four radiation patches have a same area, every two radiation patches that are symmetrical along the central axis in the horizontal direction may have a same area. As shown in (c) in FIG. 3, the central axis may be the x-axis in (c) in FIG. 3. In this case, the radiation patches 331a and 331d may have a same area, and the radiation patches 331b and 331c may have a same area.

Similarly, if the series-fed antenna includes six or more radiation patches, every two radiation patches that are symmetrical along the central axis in the horizontal direction may also have a same area. Details are not described herein again.

In the embodiments of this application, a shape of the radiation patch may not be limited to the rectangular shape shown in (c) in FIG. 3, for example, may alternatively be a circular shape, an elliptical shape, a square shape, or another irregular shape. This is not specifically limited in this application.

In the embodiments of this application, the difference between the main lobe energy and the side lobe energy that are radiated by the radiation patch may be adjusted by setting different areas of the plurality of radiation patches. For example, it is assumed that the first preset threshold is set to 18 dB, that is, the difference between the main lobe energy and the side lobe energy that are radiated by the radiation patch is greater than or equal to 18 dB. In this application, an example in which the difference between the main lobe energy and the side lobe energy that are radiated by the patch is 18 dB is used for description. If the difference between the main lobe energy and the side lobe energy that are radiated by the radiation patch is expected to be 18 dB, the excitation amplitude ratio may be roughly set to 0.18:0.32 (assuming that there are four antenna units). Based on this, the expected difference between the main lobe energy and the side lobe energy may be achieved by adjusting the areas of the plurality of radiation patches, so that the low side lobe is implemented.

Specifically, adjustment may be performed based on the following rule. That is, a shorter length of the patch indicates stronger radiation energy.

It may be understood that, the expected difference between the main lobe energy and the side lobe energy that are radiated by the radiation patch may be achieved by setting only different areas of the plurality of radiation patches. Alternatively, the expected difference between the main lobe energy and the side lobe energy that are radiated by the radiation patch may be achieved with reference to different offsets of the plurality of slots relative to the center of the region and/or different areas of the plurality of slots that are mentioned above.

Specifically, the expected difference between the main lobe energy and the side lobe energy that are radiated by the radiation patch may be achieved with reference to different areas of the plurality of radiation patches and different offsets of the plurality of slots relative to the center of the region. Alternatively, the expected difference between the main lobe energy and the side lobe energy that are radiated by the radiation patch may be achieved with reference to different areas of the plurality of radiation patches and different areas of the plurality of slots. Alternatively, the expected difference between the main lobe energy and the side lobe energy that are radiated by the radiation patch may be achieved with reference to different areas of the plurality of radiation patches, different offsets of the plurality of slots relative to the center of the region, and different areas of the plurality of slots. This is not specifically limited in this application.

Optionally, in some embodiments, the at least one radiation patch includes the plurality of radiation patches, a distance between centers of different patches in the plurality of radiation patches is an integer multiple of the half of the waveguide wavelength of the channel, and the channel is a waveguide channel.

In the embodiments of this application, if the waveguide channel is an SIW channel, the distance between the centers of the different patches in the plurality of radiation patches may be an integer multiple of a half of a waveguide wavelength of the SIW channel. For example, as shown in (c) in FIG. 3, there are four patches: the patch 331a, the patch 331b, the patch 331c, and the patch 331d. A distance between centers of the patches 331a and 331b may be an integer multiple of the half of the waveguide wavelength of the SIW channel. In other words, a value of m shown in (c) in FIG. 3 may be an integer multiple of the half of the waveguide wavelength of the SIW channel. Similarly, a distance between centers of the patches 331b and 331c may be an integer multiple of the half of the waveguide wavelength of the SIW channel; and a distance between centers of the patches 331c and 331d may be an integer multiple of the half of the waveguide wavelength of the SIW channel.

It may be understood that the waveguide wavelength of the SIW channel in the embodiments of this application is not a fixed value, and the waveguide wavelength of the SIW channel may be related to a size of the plated hole and a distance between the plurality of plated holes.

The waveguide wavelength in the embodiments of this application may be a wavelength of an electromagnetic wave propagated in a waveguide channel.

Usually, it is assumed that the waveguide wavelength of the SIW channel is h. In this case, the distance between the centers of the different patches may be one or two times of 0.5h.

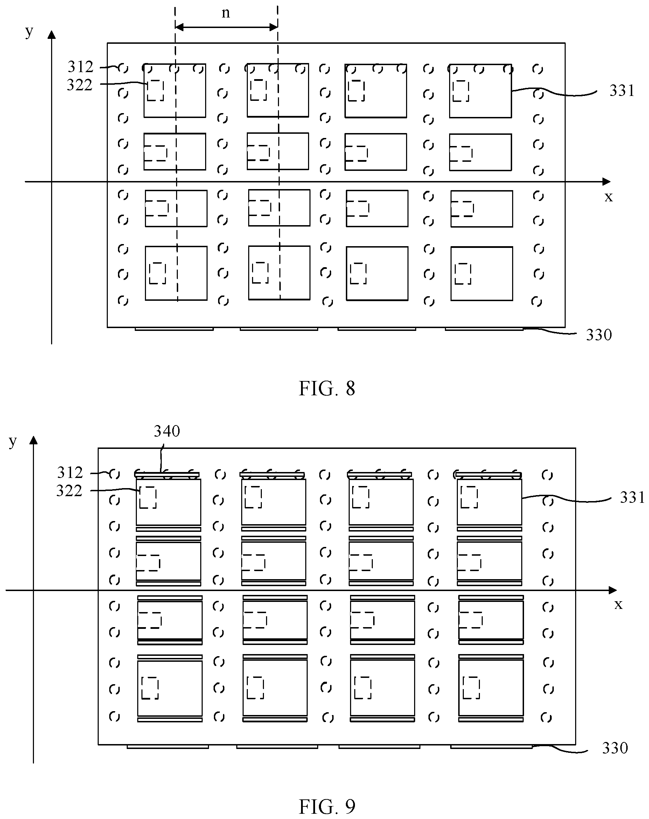

Optionally, in some embodiments, as shown in FIG. 8 (where FIG. 8 is a schematic diagram of the series-fed antenna according to still another embodiment of this application), the at least one radiation patch includes a plurality of radiation patch groups that are arranged in the vertical direction, a distance between different radiation patch groups in the plurality of radiation patch groups is a second preset threshold, and the vertical direction is the direction of the first side edge of the second metal dielectric.

In the embodiments of this application, that the distance between the different radiation patch groups in the plurality of radiation patch groups is the second preset threshold may mean that a distance between any two adjacent radiation patch groups is the second preset threshold, or that a distance between at least two adjacent radiation patch groups in the plurality of radiation patch groups is the second preset threshold. This is not limited.

The vertical direction in the embodiments of this application may be the direction of the first side edge of the second metal dielectric 321, and the first side edge in this application may be a length edge or a width edge of the second metal dielectric 321. As shown in FIG. 8, a y-axis is the length edge of the second metal dielectric 321. In other words, a direction of the y-axis may be the vertical direction in this application. For details, refer to the foregoing descriptions of the "vertical direction". Details are not described herein again.

In some embodiments, the vertical direction in the embodiments of this application may also be referred to as a direction of a region formed based on a plurality of plated holes. In other words, using one radiation patch group is used as an example, a direction indicated in the figure by a plurality of plated holes surrounding a radiation patch group shown in FIG. 8 is the vertical direction. In other words, the direction of the y-axis shown in FIG. 8 may be the vertical direction in this application.

In the embodiments of this application, the second preset threshold may be a half of a waveguide wavelength of an SIW channel. In this case, a distance between centers of different patch groups in the plurality of radiation patch groups may be the half of the waveguide wavelength of the SIW channel. In other words, a value of n shown in the figure may be the half of the waveguide wavelength of the SIW channel.

In addition, the second preset threshold in the embodiments of this application may be set based on a process requirement, or may be set based on a factory setting. This is not limited.

Optionally, in some embodiments, as shown in FIG. 9 (where FIG. 9 is a schematic diagram of the series-fed antenna according to still another embodiment of this application),
parasitic patches 340 are disposed on upper and lower sides of the radiation patch in the direction of the first side edge of the second metal dielectric.

In the embodiments of this application, the first side edge of the second metal dielectric 321 may be a length edge or a width edge of the second metal dielectric 321. As shown in FIG. 9, a y-axis is the length edge of the second metal dielectric 321. In other words, the parasitic patches 340 may be disposed on the upper and lower sides of the radiation patch 331 in a direction of the y-axis.

It should be understood that in the embodiments of this application, the parasitic patch 340 may alternatively be disposed on the upper side or the lower side of the radiation patch 331 in the direction of the y-axis. This is not specifically limited in this application.

In some embodiments, the direction of the first side edge of the second metal dielectric in the embodiments of this application may also be referred to as a direction of a region formed based on a plurality of plated holes, and the direction of the region may be the direction of the y-axis shown in FIG. 9. In this case, the parasitic patch 340 may be disposed on the upper side and/or the lower side in the direction of the region. This is not limited.

In the embodiments of this application, the parasitic patch 340 may be a substance the same as or similar to the radiation patch 331. For example, the parasitic patch may be a copper sheet or a copper foil, or another conductive substance. This is not limited.

According to this technical solution provided in the embodiments of this application, because the parasitic patches are disposed on the upper and lower sides of the radiation patch in the direction of the first side edge of the second metal dielectric, the wideband feature can be further implemented by using the region formed based on the plurality of plated holes, the slot, the radiation patch, and the parasitic patches.

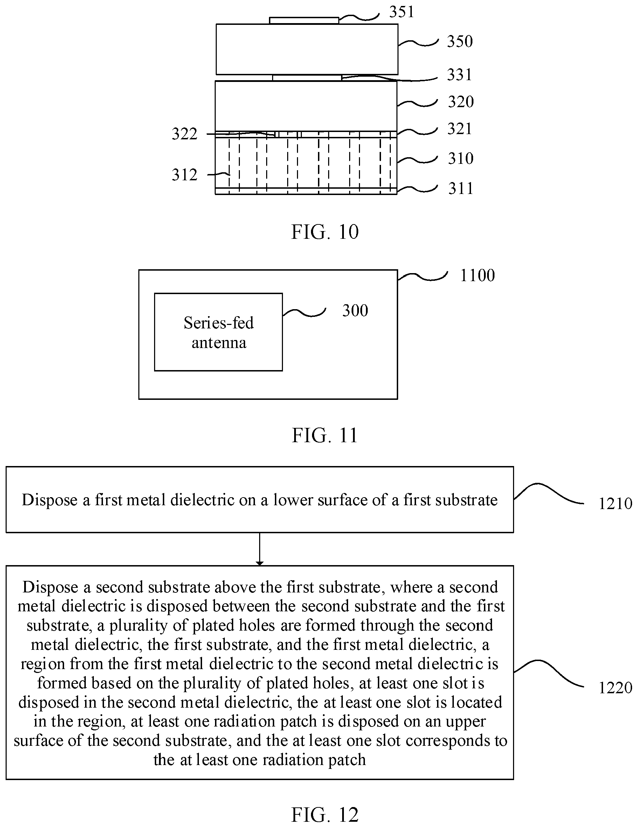

Optionally, in some embodiments, as shown in FIG. 10, the antenna may further include the third substrate 350.

The third substrate 350 is disposed above the radiation patch 331, and the at least one radiation patch 351 is disposed on an upper surface of the third substrate 350.

In the embodiments of this application, the radiation patch 351 may also be a copper sheet or a copper foil, or another conductive substance. This is not specifically limited in this application.

In the embodiments of this application, the at least one radiation patch 351 may be referred to as a secondary radiation patch. As described above, the secondary radiation patch is relative to a primary radiation patch. To be specific, the distance between the at least one radiation patch on the third substrate and the at least one slot 322 is longer than the distance between the at least one radiation patch 331 on the second substrate and the at least one slot 322, and therefore, the at least one radiation patch 351 on the third substrate may be referred to as a secondary radiation patch; the distance between the at least one radiation patch 331 on the second substrate and the at least one slot 322 is shorter than the distance between the at least one radiation patch on the third substrate and the at least one slot 322, and therefore, the at least one radiation patch 331 on the second substrate may be referred to as a primary radiation patch.

In the embodiments of this application, the region that is from the first metal dielectric 311 to the second metal dielectric 321 and that is formed based on the plurality of plated holes 312 may bind, inside the substrate, energy transmitted by the excitation source. In addition, the energy transmitted by the excitation source may pass through the at least one slot 322 disposed in the second metal dielectric 321 in the region, so that a signal passing through the at least one slot 322 may be coupled to the radiation patch 331 and the radiation patch 351 by using the at least one slot 322. Therefore, a multi-resonance working manner is formed, three in-band resonance points are implemented, and the wideband feature is implemented.

According to this solution provided in the embodiments of this application, because the structure of the antenna includes the third substrate and the radiation patch on the third substrate, the multi-resonance working manner is formed by using the region formed based on the plurality of plated holes, the slot, the radiation patch on the upper surface of the second substrate, and the radiation patch on the upper surface of the third substrate, so that the wideband feature can be further implemented.

In some embodiments, based on structures in FIG. 3 to FIG. 10, a series-fed traveling wave antenna may alternatively be used in this application, to implement the wideband feature and the low side lobe.

An embodiment of this application further provides a communication device 1100. The device includes any antenna of the foregoing series-fed antenna 300.

An embodiment of this application further provides a series-fed antenna manufacturing method 1200. The method 1200 may include step 1210 and step 1220.

1210: Dispose a first metal dielectric on a lower surface of a first substrate.

1220: Dispose a second substrate above the first substrate, where a second metal dielectric is disposed between the second substrate and the first substrate, a plurality of plated holes are formed through the second metal dielectric, the first substrate, and the first metal dielectric, a region from the first metal dielectric to the second metal dielectric is formed based on the plurality of plated holes, at least one slot is disposed in the second metal dielectric, the at least one slot is located in the region, at least one radiation patch is disposed on an upper surface of the second substrate, and the at least one slot corresponds to the at least one radiation patch.

Optionally, in some embodiments, that the at least one slot corresponds to the at least one radiation patch includes: the at least one slot has a one-to-one correspondence with the at least one radiation patch; each of the at least one slot corresponds to at least one radiation patch; or each of the at least one radiation patch corresponds to at least one slot.

Optionally, in some embodiments, the at least one radiation patch covers the at least one slot.

Optionally, in some embodiments, the region is a circled region that is formed based on the plurality of plated holes, and an SIW channel is formed in the circled region.

Optionally, in some embodiments, distances between adjacent plated holes in the plurality of plated holes are equal.

Optionally, in some embodiments, the at least one slot includes a plurality of slots, the plurality of slots are arranged in a vertical direction, the vertical direction is a direction of a first side edge of the second metal dielectric, and the plurality of slots have different areas.

Optionally, in some embodiments, the areas of the plurality of slots enable a difference between main lobe energy and side lobe energy that are radiated by the at least one radiation patch to be greater than or equal to a first preset threshold.

Optionally, in some embodiments, the at least one slot includes the plurality of slots, and the plurality of slots have different offsets relative to a center of the region.

Optionally, in some embodiments, the offsets of the plurality of slots relative to the center of the region enable the difference between the main lobe energy and the side lobe energy that are radiated by the at least one radiation patch to be greater than or equal to the first preset threshold.

Optionally, in some embodiments, the at least one radiation patch includes a plurality of radiation patches, and the plurality of radiation patches have different areas.

Optionally, in some embodiments, the areas of the plurality of radiation patches enable the difference between the main lobe energy and the side lobe energy that are radiated by the plurality of radiation patches to be greater than or equal to the first preset threshold.

Optionally, in some embodiments, the at least one radiation patch includes the plurality of radiation patches, a distance between centers of different patches in the plurality of radiation patches is an integer multiple of a half of a waveguide wavelength of the channel, and the channel is a waveguide channel.

Optionally, in some embodiments, the at least one radiation patch includes a plurality of radiation patch groups that are arranged in the vertical direction, a distance between different radiation patch groups in the plurality of radiation patch groups is a second preset threshold, and the vertical direction is the direction of the first side edge of the second metal dielectric.

Optionally, in some embodiments, parasitic patches are disposed on upper and lower sides of the radiation patch in the direction of the first side edge of the second metal dielectric.

Optionally, in some embodiments, the method 1200 further includes: disposing a third substrate above the radiation patch, where at least one radiation patch is disposed on an upper surface of the third substrate.

An embodiment of this application further provides a radar. The radar includes any one of the foregoing series-fed antennas 300.

An embodiment of this application further provides a terminal. The terminal may be a transportation vehicle or an intelligent device, for example, an unmanned aerial vehicle, an unmanned transport vehicle, a robot, or a vehicle. The terminal includes at least one radar, and the at least one radar includes any one of the foregoing series-fed antennas 300.

In the several embodiments provided in this application, it should be understood that the disclosed system and apparatus may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A series-fed antenna, comprising:
a first substrate, wherein a first metal dielectric is disposed on a lower surface of the first substrate; and
a second substrate, wherein the second substrate is disposed above the first substrate, a second metal dielectric is disposed between the second substrate and the first substrate, a plurality of plated holes are formed through the second metal dielectric, the first substrate, and the first metal dielectric, a region from the first metal dielectric to the second metal dielectric is formed based on the plurality of plated holes, at least one slot is disposed in the second metal dielectric, the at least one slot is located in the region, at least one radiation patch is disposed on an upper surface of the second substrate, and the at least one slot corresponds to the at least one radiation patch.

2. The antenna according to claim 1, wherein that the at least one slot corresponds to the at least one radiation patch comprises:
the at least one slot has a one-to-one correspondence with the at least one radiation patch;
each of the at least one slot corresponds to at least one radiation patch; or
each of the at least one radiation patch corresponds to at least one slot.

3. The antenna according to claim 1 or 2, wherein the at least one radiation patch covers the at least one slot.

4. The antenna according to any one of claims 1 to 3, wherein the region is a circled region that is formed based on the plurality of plated holes, and a substrate integrated waveguide SIW channel is formed in the circled region.

5. The antenna according to any one of claims 1 to 4, wherein distances between adjacent plated holes in the plurality of plated holes are equal.

6. The antenna according to claim 5, wherein a distance between centers of adjacent holes in the plurality of plated holes satisfies the following relationship: s/d<2 and d/w<0.1, wherein s is the distance between the centers of the adjacent holes, d is a diameter of the hole, and w is a width of the substrate integrated waveguide SIW channel.

7. The antenna according to any one of claims 1 to 6, wherein the at least one slot comprises a plurality of slots, the plurality of slots are arranged in a vertical direction, the vertical direction is a direction of a first side edge of the second metal dielectric, and the plurality of slots have different areas.

8. The antenna according to claim 7, wherein the areas of the plurality of slots enable a difference between main lobe energy and side lobe energy that are radiated by the at least one radiation patch to be greater than or equal to a first preset threshold.

9. The antenna according to any one of claims 1 to 8, wherein the at least one slot comprises the plurality of slots, and the plurality of slots have different offsets relative to a center of the region.

10. The antenna according to claim 9, wherein
the plurality of slots are located on a same side of the center of the region, and a distance between centers of adjacent slots is an even multiple of a half of a waveguide wavelength of the channel; or the plurality of slots are located on different sides of the center of the region, and a distance between centers of adjacent slots is an odd multiple of a half of a waveguide wavelength of the channel.

11. The antenna according to claim 9 or 10, wherein the offsets of the plurality of slots relative to the center of the region enable the difference between the main lobe energy and the side lobe energy that are radiated by the at least one radiation patch to be greater than or equal to the first preset threshold.

12. The antenna according to any one of claims 1 to 11, wherein the at least one radiation patch comprises a plurality of radiation patches, and the plurality of radiation patches have different areas.

13. The antenna according to claim 12, wherein the areas of the plurality of radiation patches enable the difference between the main lobe energy and the side lobe energy that are radiated by the plurality of radiation patches to be greater than or equal to the first preset threshold.

14. The antenna according to any one of claims 1 to 13, wherein the at least one radiation patch comprises the plurality of radiation patches, a distance between centers of different patches in the plurality of radiation patches is an integer multiple of the half of the waveguide wavelength of the channel, and the channel is a waveguide channel.

15. The antenna according to any one of claims 1 to 14, wherein the at least one radiation patch comprises a plurality of radiation patch groups that are arranged in the vertical direction, a distance between different radiation patch groups in the plurality of radiation patch groups is a second preset threshold, and the vertical direction is the direction of the first side edge of the second metal dielectric.

16. The antenna according to any one of claims 1 to 15, wherein parasitic patches are disposed on upper and lower sides of the radiation patch in the direction of the first side edge of the second metal dielectric.

17. The antenna according to any one of claims 1 to 16, wherein the antenna further comprises:
a third substrate, wherein the third substrate is disposed above the radiation patch, and at least one radiation patch is disposed on an upper surface of the third substrate.

18. A radar, wherein the communication device comprises the antenna according to any one of claims 1 to 17.

19. A series-fed antenna manufacturing method, comprising:
disposing a first metal dielectric on a lower surface of a first substrate; and
disposing a second substrate above the first substrate, wherein a second metal dielectric is disposed between the second substrate and the first substrate, a plurality of plated holes are formed through the second metal dielectric, the first substrate, and the first metal dielectric, a region from the first metal dielectric to the second metal dielectric is formed based on the plurality of plated holes, at least one slot is disposed in the second metal dielectric, the at least one slot is located in the region, at least one radiation patch is disposed on an upper surface of the second substrate, and the at least one slot corresponds to the at least one radiation patch.

20. The method according to claim 19, wherein that the at least one slot corresponds to the at least one radiation patch comprises:
the at least one slot has a one-to-one correspondence with the at least one radiation patch;
each of the at least one slot corresponds to at least one radiation patch; or
each of the at least one radiation patch corresponds to at least one slot.

21. The method according to claim 19 or 20, wherein the at least one radiation patch covers the at least one slot.

22. The method according to any one of claims 19 to 21, wherein the region is a circled region that is formed based on the plurality of plated holes, and a substrate integrated waveguide SIW channel is formed in the circled region.

23. The method according to any one of claims 19 to 22, wherein distances between adjacent plated holes in the plurality of plated holes are equal.

24. The method according to claim 23, wherein a distance between centers of adjacent holes in the plurality of plated holes satisfies the following relationship: s/d<2 and d/w<0.1, wherein s is the distance between the centers of the adjacent holes, d is a diameter of the hole, and w is a width of the substrate integrated waveguide SIW channel.

25. The method according to any one of claims 19 to 24, wherein the at least one slot comprises a plurality of slots, the plurality of slots are arranged in a vertical direction, the vertical direction is a direction of a first side edge of the second metal dielectric, and the plurality of slots have different areas.

26. The method according to claim 25, wherein the areas of the plurality of slots enable a difference between main lobe energy and side lobe energy that are radiated by the at least one radiation patch to be greater than or equal to a first preset threshold.

27. The method according to any one of claims 19 to 26, wherein the at least one slot comprises the plurality of slots, and the plurality of slots have different offsets relative to a center of the region.

28. The method according to claim 27, wherein
the plurality of slots are located on a same side of the center of the region, and a distance between centers of adjacent slots is an even multiple of a half of a waveguide wavelength of the channel; or the plurality of slots are located on different sides of the center of the region, and a distance between centers of adjacent slots is an odd multiple of a half of a waveguide wavelength of the channel.

29. The method according to claim 27 or 28, wherein the offsets of the plurality of slots relative to the center of the region enable the difference between the main lobe energy and the side lobe energy that are radiated by the at least one radiation patch to be greater than or equal to the first preset threshold.

30. The method according to any one of claims 19 to 29, wherein the at least one radiation patch comprises a plurality of radiation patches, and the plurality of radiation patches have different areas.

31. The method according to claim 30, wherein the areas of the plurality of radiation patches enable the difference between the main lobe energy and the side lobe energy that are radiated by the plurality of radiation patches to be greater than or equal to the first preset threshold.

32. The method according to any one of claims 19 to 31, wherein the at least one radiation patch comprises the plurality of radiation patches, a distance between centers of different patches in the plurality of radiation patches is an integer multiple of the half of the waveguide wavelength of the channel, and the channel is a waveguide channel.

33. The method according to any one of claims 19 to 32, wherein the at least one radiation patch comprises a plurality of radiation patch groups that are arranged in the vertical direction, a distance between different radiation patch groups in the plurality of radiation patch groups is a second preset threshold, and the vertical direction is the direction of the first side edge of the second metal dielectric.

34. The method according to any one of claims 19 to 33, wherein parasitic patches are disposed on upper and lower sides of the radiation patch in the direction of the first side edge of the second metal dielectric.

35. The method according to any one of claims 19 to 34, wherein the method further comprises:
disposing a third substrate above the radiation patch, wherein at least one radiation patch is disposed on an upper surface of the third substrate.
